**Europäisches Patentamt**

(19) **European Patent Office**

**Office européen des brevets**

(11) Veröffentlichungsnummer: **0 075 853**
**B1**

(12) **EUROPÄISCHE PATENTSCHRIFT**

(45) Veröffentlichungstag der Patentschrift:
**14.11.84**

(21) Anmeldenummer: **82108754.1**

(22) Anmeldetag: **22.09.82**

(51) Int. Cl.³: **G 03 B 41/18**

(54) **Röntgen-Kassette.**

(30) Priorität: **30.09.81  DE 8128582 U**

(43) Veröffentlichungstag der Anmeldung:
**06.04.83 Patentblatt 83/14**

(45) Bekanntmachung des Hinweises auf die Patenterteilung:
**14.11.84 Patentblatt 84/46**

(84) Benannte Vertragsstaaten:
**FR GB IT**

(56) Entgegenhaltungen:
**EP - A - 0 003 331**
**DE - A - 2 218 989**
**DE - B - 1 189 846**
**DE - U - 1 939 441**
**GB - A - 1 420 918**

(73) Patentinhaber: **AGFA-GEVAERT Aktiengesellschaft,**
**D-5090 Leverkusen 1 (DE)**

(72) Erfinder: **Müller, Jürgen, Bozzarisstrasse 7**
**D-8000 München 90 (DE)**
Erfinder: **Bauer, Walter, Heinrich-Wieland-Strasse 178,**
**D-8000 München 83 (DE)**

ACTORUM AG

## Beschreibung

Die Neuerung betrifft eine Kassette für Röntgenfilm mit einem Kassettenunterteil und einem Kassettendeckel, wobei der Kassettendeckel am Kassettenunterteil entlang einer bestimmten Seite schwenkbar angelenkt ist und der Kassettendeckel am Kassettenunterteil in seiner geschlossenen Position in Ermangelung anderweitiger Kräfte mittels Magneten mit einer bestimmten Haltekraft festgehalten wird, und mit einem Verschluss zum Verriegeln des Kassettendeckels in seiner geschlossenen Position am Kassettenunterteil.

Bei Betätigung des Verschlusses zum Öffnen der Kassette zwecks Filmwechsel muss der Deckel der Kassette etwas aufspringen, damit der Verschluss freigegeben wird und der Deckel leichter gegriffen werden kann. Bei herkömmlichen Kassetten, die aus Metall bestehen, wird dies durch Vorspannen des Kassettendeckels erreicht. Bei einer Kassette aus Kunststoff gemäss dem Stand der Technik hat sich als nachteilig erwiesen, dass eine Vorspannung der Kunststoffteile auf Dauer nicht gewährleistet ist.

Der Neuerung liegt daher die Aufgabe zugrunde, eine Kassette aus Kunststoff gemäss dem Gattungsbegriff des Hauptanspruches so auszubilden, dass bei Entriegelung des geschlossenen Kassettendeckels der Kassettendeckel selbsttätig entgegen der Haltekraft der Magneten leicht angehoben wird, ohne dass hierzu eine Vorspannung des Kassettendeckels erforderlich wäre.

Zur Lösung dieser Aufgabe ist mindestens ein Federelement vorgesehen, welches an einer der bestimmten Seite benachbarten oder gegenüberliegenden Seite am Kassettenunterteil oder am Kassettendeckel angeordnet ist und bei geschlossener Kassette sich einerseits am Kassettenunterteil und andererseits am Kassettendeckel abstützt und hierbei zusammengedrückt ist, wobei das Federelement bezüglich seiner Spannkraft so ausgelegt ist, dass die Spannkraft bei geschlossenem Kassettendeckel die Haltekraft der Magneten übersteigt.

Zweckmässigerweise ist das Federelement gemäss den Unteransprüchen als Federblech ausgebildet, an der der bestimmten Seite gegenüberliegenden Seite angeordnet und am Kassettenunterteil befestigt.

Beim Schliessen der Kassette wird dieses Federelement daher vorgespannt. Beim Entriegeln des Kassettendeckels drückt das vorgespannte Federelement den Kassettendeckel entgegen der Haltekraft der Magneten so weit nach oben, dass der Verschluss freigegeben wird. Zudem wird durch das Anheben des Kassettendeckels mittels des Federelementes die Haltekraft der Magneten zum grössten Teil überwunden, so dass bei der weiteren Öffnung der Kassette von Hand die der Öffnung entgegenwirkende Magnetkraft nicht mehr als störend empfunden wird.

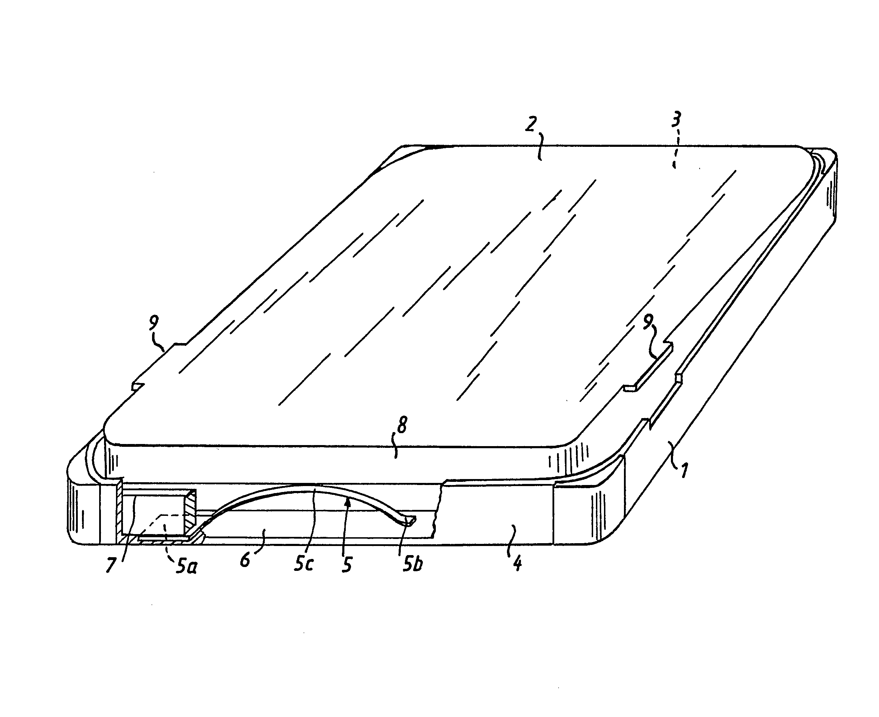

Im folgenden wird die Erfindung anhand einer halbschematischen Zeichnung näher erläutert. Die einzige Figur der Zeichnung zeigt eine perspektivische Ansicht einer Kassette für Röntgenfilme mit geringfügig geöffnetem Kassettendeckel.

Die in der Figur abgebildete Kassette umfasst einen Kassettenunterteil 1 sowie einen Kassettendeckel 2. Der Kassettendeckel 2 ist an der in der Figur rückwärtig gelegenen Seite 3 des Kassettenunterteils an diesem schwenkbar angelenkt. Zum Verschliessen und Verriegeln der Kassette ist eine nicht näher dargestellte Verschlussvorrichtung vorgesehen, welche zwischen dem Kassettenunterteil und dem Kassettendeckel wirkt. An der der Seite 3 gegenüberliegenden, vorderen Seite 4 der Kassette ist am Kassettenunterteil eine Blattfeder 5 vorgesehen. Diese Blattfeder 5 ist mit ihrem an einem Ende ausgebildeten Befestigungsteil 5a zwischen dem Boden 6 des Kassettenunterteils und dem am Kassettenunterteil befestigten Element 7 eingeklemmt und wird hierdurch fest am Kassettenunterteil 1 gehalten. Das freie Ende 5b des Federblechs 5 stützt sich am Boden 6 des Kassettenunterteils ab. Mit seinem gewölbten oberen Teil 5c wirkt das Federblech mit dem vorderen Seitenteil 8 des Kassettendeckels 2 zusammen.

Wird nun der Kassettendeckel 2 aus der in der Figur dargestellten Stellung nach unten gedrückt, so wird hierdurch das Federblech 5 zusammengedrückt und daher vorgespannt. In der geschlossenen Stellung des Kassettendeckels rastet die nicht näher dargestellte Verriegelungsvorrichtung ein, so dass der Kassettendeckel in seiner geschlossenen Stellung verharrt.

Beim Entriegeln des Kassettendeckels wird nun der Kassettendeckel aufgrund der Spannkraft der Feder 5 entgegen der magnetischen Haltekraft, die zwischen Kassettenunterteil und Kassettendeckel wirkt, in die in der Figur dargestellte, geringfügig geöffnete Stellung angehoben. Hierdurch wird der nicht näher dargestellte Verschluss freigegeben und es wird möglich, den Kassettendeckel an dem an ihm ausgebildeten, nunmehr zugänglichen Griffelement 9 anzuheben.

## Patentansprüche

1. Kassette für Röntgenfilm mit einem Kassettenunterteil und einem Kassettendeckel, wobei der Kassettendeckel am Kassettenunterteil entlang einer bestimmten Seite schwenkbar angelenkt ist und der Kassettendeckel am Kassettenunterteil in seiner geschlossenen Position in Ermangelung anderweitiger Kräfte mittels Magneten mit einer bestimmten Haltekraft festgehalten wird, und mit einem Verschluss zum Verriegeln des Kassettendeckels in seiner geschlossenen Position am Kassettenunterteil, dadurch gekennzeichnet, dass mindestens ein Federelement (5) vorgesehen ist, welches an einer der bestimmten Seite (3) benachbarten oder gegenüberliegenden Seite am Kassettenunterteil (1) oder am Kassettendeckel (2) angeordnet ist und bei geschlossener Kassette sich einerseits am Kassettenunterteil und andererseits am Kassettendeckel abstützt und hierbei zusammengedrückt ist, wobei das Federelement bezüglich seiner Spannkraft so ausgelegt ist, dass die Spannkraft bei geschlossenem Kassettendeckel die Haltekraft der Magneten übersteigt.

2. Kassette nach Anspruch 1, dadurch gekennzeichnet, dass das Federelement (5) am Kassettenunterteil (1) befestigt ist.

3. Kassette nach einem der Ansprüche 1 oder 2, dadurch gekennzeichnet, dass das Federelement an der der bestimmten Seite (3) gegenüberliegenden Seite angeordnet ist.

4. Kassette nach einem der vorhergehenden Ansprüche, dadurch gekennzeichnet, dass das Federelement (5) als Federblech ausgebildet ist.

## Claims

1. A cartridge for an X-ray film with a cartridge lower part and a cartridge cover, the cartridge cover being articulated pivotally on the cartridge lower part along a specific side and the cartridge cover being held on the cartridge lower part in its closed position, in the absence of other forces, by means of magnets having a specific retaining force, and with a closure for locking the cartridge cover in its closed position on the cartridge lower part, characterized in that there is provided at least one spring element (5) which is disposed on the cartridge lower part (1) or on the cartridge cover (2) at a side adjacent to or opposite the specific side (3) and, when the cartridge is closed, is supported on the one hand at the cartridge lower part and on the other hand at the cartridge cover and is thereby compressed, the spring element being designed in such a way with respect to its tensioning force that the tensioning force exceeds the retaining force of the magnets when the cartridge cover is closed.

2. A cartridge according to claim 1, characterized in that the spring element (5) is secured on the cartridge lower part (1).

3. A cartridge according to claim 1 or 2, characterized in that the spring element is disposed at the side opposite the specific side (3).

4. A cartridge according to one of the preceding claims, characterized in that the spring element (5) is in the form of a spring plate.

## Revendications

1. Cassette pour film radiographique, comprenant une partie inférieure de cassette et un couvercle de cassette, le couvercle étant articulé à la partie inférieure de cassette de manière à pouvoir pivoter le long d'un côté déterminé et le couvercle de cassette étant, à défaut d'autres forces, maintenu sur la partie inférieure de cassette en sa position fermée au moyen d'aimants, avec une force de maintien déterminée, et une fermeture pour verrouiller le couvercle de cassette dans sa position fermée sur la partie inférieure de cassette, caractérisée en ce qu'il est prévu au moins un élément à ressort (5), qui est disposé sur un côté voisin du côté déterminé ou sur un côté opposé de la partie inférieure de cassette (1) ou du couvercle de cassette (2) et qui s'appuie, lorsque la cassette est fermée, d'une part sur la partie inférieure de cassette et d'autre part sur le couvercle de cassette et est ainsi comprimé, l'élément à ressort étant conçu du point de vue de sa force élastique de façon que celle-ci dépasse la force de maintien des aimants lorsque le couvercle de cassette est fermé.

2. Cassette suivant la revendication 1, caractérisée en ce que l'élément à ressort (5) est fixé sur la partie intérieure de cassette (1).

3. Cassette suivant l'une des revendications 1 ou 2, caractérisée en ce que l'élément à ressort est disposé sur le côté opposé au côté déterminé (3).

4. Cassette suivant l'une des revendications précédentes, caractérisée en ce que l'élément à ressort (5) est agencé en tôle formant ressort.